# EUROPÄISCHE PATENTANMELDUNG

(11) **EP 2 537 728 A2**
(43) Veröffentlichungstag der Anmeldung: **26.12.2012**
(21) Anmeldenummer: 12400022.5
(22) Anmeldetag: 19.06.2012
(51) Int. Cl.: B61C 17/06

(54) **Schienenfahrzeuganordnung**

(30) Priorität: 20.06.2011 DE 102011104959
(71) Anmelder: Vossloh Locomotives GmbH, 24159 Kiel (DE)
(72) Erfinder: Hildebrandt, Tim, 24244 Felm (DE); Völler, Sebastian, 24111 Kiel (DE); von der Weth, Christiann, 24159 Kiel (DE)
(74) Vertreter: Hansmann, Dierk

(57) **Zusammenfassung**

Bei einer Schienenfahrzeuganordnung zur Ausbildung einer Mehrfachtraktion ist vorgesehen, dass ein Fahrzeug als Schienenantriebseinheit mit mindestens einer Antriebseinheit als Antriebsmodul ausgebildet ist. Zusätzlich ist dabei die Schienenantriebseinheit mit einer Lokomotive als Führungsfahrzeug gekoppelt sowie zur Steuerung und Überwachung der verbundenen Antriebseinheit der Schienenantriebseinheiten durch korrespondierende Einheiten über eine trennbare Schnittstelle verbunden.

## Beschreibung

Die Erfindung bezieht sich auf eine Schienenfahrzeuganordnung zur Ausbildung einer Mehrfachtraktion durch getrennte Fahrzeuge zur Bildung mehrerer Antriebseinheiten, die mechanisch miteinander koppelbar und über trennbare Schnittstellen gemeinsam steuerbar und überwachbar sind, wobei ein Fahrzeug als Antriebseinheit durch eine Lokomotive zur Führung ausgebildet ist.

Es sind Anordnungen aus beispielsweise zwei miteinander gekoppelte Lokomotiven bekannt, um die Traktionsleistung zu erhöhen.

Es hat sich aber gezeigt, dass derartige Anordnungen beim Einsatz für Rangierlokomotiven und eine Kopplung mit einer weiteren Lokomotive für den Streckendienst nicht wirtschaftlich durchführbar ist, da die unterschiedlichen Betriebszustände unterschiedliche Leistungen erfordern. Es ist nicht vertretbar, für den Rangierbetrieb Lokomotiven mit überdimensionaler Leistung einzusetzen. Ferner ist zu berücksichtigen, dass auch durch unterschiedliche Antriebsenergie der Lokomotive oftmals diese nur begrenzt einsetzbar ist.

Die Aufgabe der Erfindung besteht darin, eine flexible Schienenfahrzeuganordnung zu schaffen, die wirtschaftlich die erforderliche Traktionsleistung auf einfache Weise durch zusätzliche Antriebseinheiten ermöglicht, wobei eine Lokomotive als Führungsfahrzeug erforderlich ist und die Mehrfachtraktion mit unterschiedlichen Antriebsenergien wahlweise ermöglicht wird.

Die Lösung dieser Aufgabe erfolgt erfindungsgemäß dadurch, dass ein Fahrzeug als Schienenantriebseinheit mit mindestens einer Antriebseinheit als Antriebsmodul ausgebildet und zusätzlich mit der Lokomotive als Führungsfahrzeug gekoppelt sowie zur Steuerung und Überwachung der verbundenen Antriebseinheit als Schienenantriebseinheiten durch korrespondierende Einheiten über eine trennbare Schnittstelle verbunden sind.

Hierdurch ist es möglich, nur eine vollständig ausgerüstete Lokomotive einzusetzen und die Leistungserhöhung durch die Antriebseinheit ohne eigene Funktionsfähigkeit und Ausrüstungen durch die zusätzlich koppelbaren Schienenantriebseinheiten zu verwirklichen.

Somit ist es auch möglich, unterschiedliche Energien zu verwenden und nur die Primärenergie der Schienenantriebseinheiten aus einer Oberleitung zu beziehen. Das Konzept gewährleistet somit eine Flexibilität bei minimalem Aufwand. Reicht die Traktionsleistung aus, kann auch der Antrieb der Lokomotive abgestellt werden und nur noch die Führungsfunktion als Steuerwagen durch die Lokomotive erfüllt werden.

Unterschiedliche Antriebskonzepte der Schienenantriebseinheiten sind durch aufgezeigte Alternativen der Unteransprüche 2, 3 und 4 gekennzeichnet.

Um einen Einsatz des Schienenantriebseinheiten in Abstand zur Lokomotive im Zugverband einzusetzen, ist vorgesehen, dass die Kopplung zwischen Lokomotive und Schienenantriebseinheiten über eine Funkverbindung einstellbar und überwachbar ist.

Ferner wird vorgeschlagen, dass die Antriebsanlage der Schienenantriebseinheiten über elektrische Fahrmotore angetriebene Drehgestelle gebildet ist.

Weiterhin sind Ausbildungen nach Anspruch 7 und 8 vorgesehen.

In den Zeichnungen sind Ausführungsbeispiele von Schienenfahrzeuganordnungen schematisch dargestellt. Es zeigen:

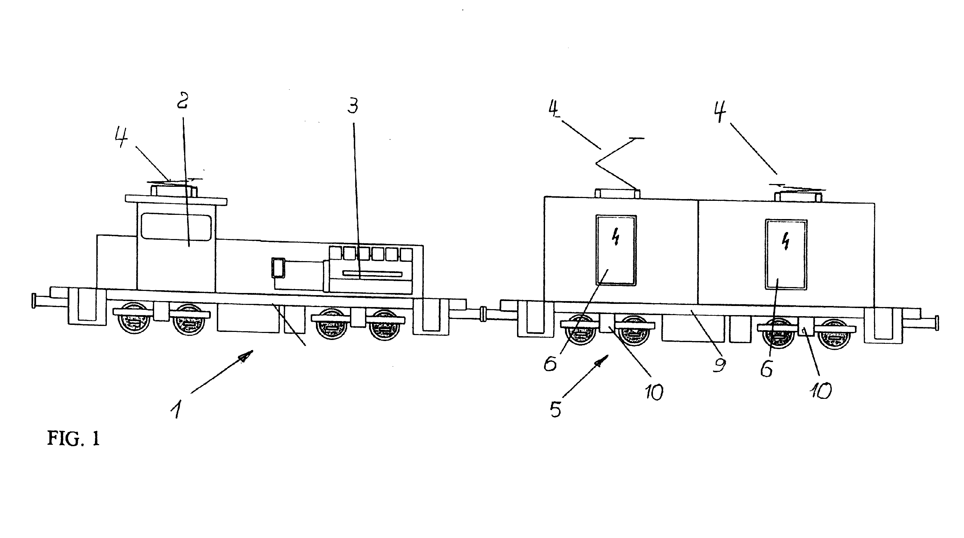

- Fig. 1: eine prinzipielle Schienenfahrzeuganordnung mit einer Lokomotive mit einer gekoppelten Schienenantriebseinheit;

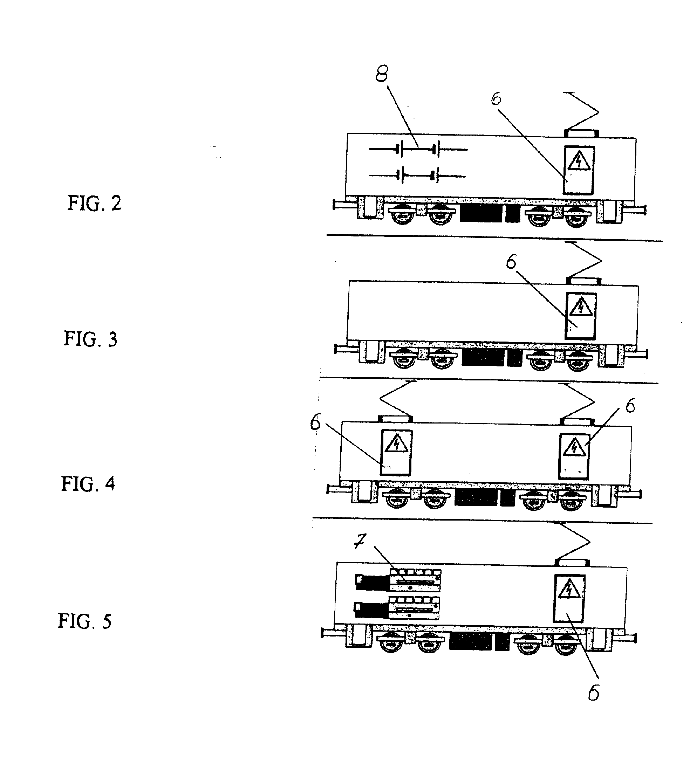

- Fig. 2: einer Schienenantriebseinheit mit elektrischem Antrieb und einer Energiespeichereinheit;
- Fig. 3: einer Schienenantriebseinheit mit einem elektrischen Antrieb;
- Fig. 4: einer Schienenantriebseinheit mit zwei getrennten elektrischen Antrieben;
- Fig. 5: einer Schienenantriebseinheit mit einem elektrischen Antrieb und einem Verbrennungsmotor als Antrieb und
- Fig. 6: ein Blockschaltbild von korrespondierenden Einheiten mit einer Funkverbindung zwischen Lokomotive und der Schienenantriebseinheit

Bei der dargestellten Anordnung ist eine Lokomotive 1 mit allen Steuerungs- und Funktionselementen und einem Führerhaus 2 angeordnet, die autark in bekannter Weise betrieben wird und als Führungseinheit bei einer Mehrfachtraktion angeordnet. Die Lokomotive 1 besitzt entsprechende Antriebseinheiten3, wie elektrische Antriebe, die über Stromabnehmer 4 versorgbar sind und/oder Verbrennungsmotore.

Die Lokomotive 1 ist mit einer Schienenantriebseinheit 5 zur Bildung einer Mehrfachtraktion gekoppelt, der Antriebseinheiten als elektrische Antriebseinheiten 6 und/oder Verbrennungsmotoren 7 zum Antrieb bzw. Energiespeichereinheiten 8 aufweist, wobei gegebenenfalls entsprechend Stromabnehmer 4 einschaltbar sind. Die zusätzliche Einheit als Schienenantriebseinheit 5 ist dabei derart ausgebildet, dass ein Betrieb ohne die gekoppelte Lokomotive 1 im wesentlichen nicht betriebsfähig ist.

Die Schienenantriebseinheit 5 weist dabei unabhängige Antriebe von der Lokomotive 1 als Führungsfahrzeug auf. Bei ausreichender Antriebsleistung der Schienenantriebseinheiten 5 und Auswahl des Antriebes ist es aber auch möglich, die Antriebseinheit 3 der Lokomotive 1 auszuschalten und diese lediglich als Steuerwagen einzusetzen.

Die Schienenantriebseinheit 1 wird durch einen Lokrahmen 9 gebildet, der ohne die normalerweise bei Fahrzeugen installierten Hauptgruppen, wie Führerhaus, Druckluftanlage und E-Modul, ausgebildet ist. Es ist lediglich eine Antriebsanlage aus Antriebseinheiten 6, 7 vorhanden. Hierbei wird die Antriebsanlage durch elektrisch über Fahrmotoren angetriebene Drehgestelle 10 gebildet.

Die Energieversorgung und Ansteuerung der Fahrmotoren erfolgt über einen Traktionsstromrichter. Die Eingangsseite des Traktionsstromrichters kann, unter Nutzung der Oberleitung, sowohl mit rein elektrischen Komponenten, als auch fahrdrahtunabhängig, durch Verbrennungskraftmaschinen und Generatoren, gespeist werden. Die Bereitstellung der Antriebsenergie kann aber auch mit Speichersystemen, Brennstoffzellen, Solarzellen oder Nutzung anderer Technologien erfolgen. Wichtig ist lediglich, dass elektrische Energie zum Antrieb der Fahrmotoren zur Verfügung gestellt wird.

Durch ausreichende Bauraum- und Gewichtsreserven ist die Ausrüstung der Schienenantriebseinheit 5 mit mehreren Stromabnehmern 4 und Hochspannungseinrichtungen möglich. Die Schienenantriebseinheit 5 ist somit auch als Mehrländervariante für verschiedene Spannungssysteme einfach ausführbar. Die Steuerung des Schienenantriebseinheit 5 erfolgt in bekannter Weise über eine Mehrfachtraktions- oder Wendezugsteuerung von der führenden Lokomotive aus. Die Druckluftversorgung wird dabei von der Lokomotive 1 übernommen. Die Bremsausrüstung der Schienenantriebseinheit 5 ist im Vergleich zur Lokomotive 1 sehr vereinfacht und entspricht der eines Güterwagens. Ebenso entfallen alle Zugsicherungseinrichtungen auf dem Schienenantriebseinheiten 5. Die Zugsicherungseinrichtungen befinden sich nur auf der Lokomotive 1. Für gesonderte betriebliche Verfahren ist gegebenenfalls die Schienenantriebseinheiten 5 mit Antennen für Zugsicherungssysteme ausgerüstet.

Werden Schienenantriebseinheiten 5 von der führenden Lokomotive 1 getrennt, rüstet dieser sich ab. Die Trennung bezieht sich auf die mechanische Kupplung, sowie auf die Bremssteuerleitungen und die elektrische Übertragung der Steuersignale. Die Schienenantriebseinheit 5 kann somit nicht mehr aus eigener Kraft verfahren werden. Gegebenenfalls kann die Schienenantriebseinheit 5 mit einer Umsetzeinrichtung ausgerüstet werden. Durch die Umsetzeinrichtung wird die Schienenantriebseinheit 5 auch ohne führende Lokomotive 1 aus eigener Kraft in Alleinfahrt verfahren werden. Die Höchstgeschwindigkeit der Umsetzeinrichtung ist auf 6 km/h begrenzt.

Bei direkter Kopplung zwischen Lokomotive 1 und Schienenantriebseinheiten 5 ist eine Verbindung zur Steuerung und Übertragung von Daten und Informationen in bekannter Weise über eine gebildete Steuerleitung gegeben.

Bei einer im Abstand zur Lokomotive 1 angeordneten Schienenantriebseinheit 5, wie am Ende des Zuges bzw. durch eine Zwischenanordnung von Güterwagen, ist eine Kopplung über eine Funkverbindung 11 angeordnet.

Anders als Reisezugwagen verfügen Güterwagen über keine durchgehende Steuerleitung für das Übertragen von Daten und Informationen durch den Zug. Um die betrieblichen und technischen Vorteile von im Zug verteilter Traktion auch im Güterverkehr nutzen zu können, wird daher ein funkgeschütztes System eingesetzt. Lediglich die führende Lokomotive 1 muss an der Spitze des Zuges laufen. Durch eine funkgestützte Mehrfachtraktion kann die Bildung der Züge wesentlich vereinfacht werden. Die Schienenantriebseinheiten 5 können, unabhängig von betrieblichen oder technischen Bedingungen, frei im Wagenzug verteilt werden.

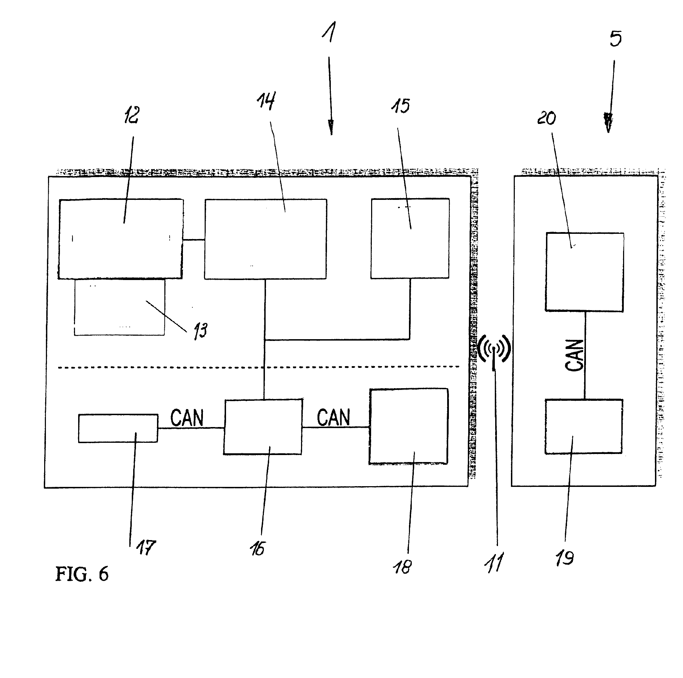

In dem Blockdiagramm gemäß Fig. 6 sind die wesentlichen Komponenten für eine Funkübertragung 11 zwischen Lokomotive 1 und Schienenantriebseinheit 5 dargestellt. Hierbei sind in der Lokomotive 1 die Bedienelemente 12 mit Hauptschaltern 13 und Elementen 14 zur Zugsicherung einschließlich der Funksignale 15 einem Rechner 16 zugeführt, der über einen CAN-Bus mit einem Zentralrechner 17 der Lokomotive 1 verbunden ist und das Ausgangssignal über einen CAN-Bus einem Sender 18 zugeführt wird.

Durch die Übertragung 11 wird ein Rechner 19 der Schienenantriebseinheit 5 angesteuert, der mit einem Sender 20 verbunden ist und die Informationen und Signale für Steuerung und Informationen die Antriebseinheiten der Schienenantriebseinheit 5 übermittelt und bestätigt.

## Patentansprüche

1. Schienenfahrzeuganordnung zur Ausbildung einer Mehrfachtraktion durch getrennte Fahrzeuge zur Bildung mehrerer Antriebseinheiten, die mechanisch miteinander koppelbar und über trennbare Schnittstellen gemeinsam steuerbar und überwachbar sind, wobei ein Fahrzeug als Antriebseinheit durch eine Lokomotive zur Führung ausgebildet ist, **dadurch gekennzeichnet, dass** ein Fahrzeug als Schienenantriebseinheit (5) mit mindestens einer Antriebseinheit (6, 7) als Antriebsmodul ausgebildet und zusätzlich mit der Lokomotive (1) als Führungsfahrzeug gekoppelt sowie zur Steuerung und Überwachung der verbundenen Antriebseinheit (6, 7) als Schienenantriebseinheit (5) durch korrespondierende Einheiten über eine trennbare Schnittstelle verbunden sind.

2. Schienenfahrzeuganordnung nach Anspruch 1, **dadurch gekennzeichnet, dass** die Schienenantriebseinheit (5) mindestens zwei getrennte elektrische Antriebseinheiten aufweist.

3. Schienenfahrzeuganordnung nach Anspruch, **dadurch gekennzeichnet, dass** die Schienenantriebseinheit (5) mit elektrischen Antriebseinheiten (6) und Energiespeichereinheiten (8) ausgerüstet ist.

4. Schienenfahrzeuganordnung nach Anspruch 1, **dadurch gekennzeichnet, dass** die Schienenantriebseinheit (5) ein Antriebselement mit Verbrennungsmotoren (7) und eine elektrische Antriebseinheit (6) aufweist.

5. Schienenfahrzeuganordnung nach einem der Ansprüche 1 bis 4, **dadurch gekennzeichnet, dass** die Kopplung zwischen Lokomotive (1) und Schienenantriebseinheiten (5) über eine Funkverbindung (11) einstellbar und überwachbar ist.

6. Schienenfahrzeuganordnung nach einem der Ansprüche 1 bis 5, **dadurch gekennzeichnet, dass** die Antriebsanlage die Schienenantriebseinheit (5) über elektrische Fahrmotore angetriebene Drehgestelle (10) gebildet ist.

7. Schienenfahrzeuganordnung nach einem der Ansprüche 1 bis 6, **dadurch gekennzeichnet, dass** dieSchienenantriebseinheit (5) ohne Lokomotive (1) als Führungsfahrzeug ohne Funktion ist.

8. Schienenfahrzeuganordnung nach einem der Ansprüche 1 bis 6, **dadurch gekennzeichnet, dass** die separate Schienenantriebseinheit (5) in Alleinfahrt mit einer Funkfernsteuerungmit einer Geschwindigkeit kleiner als 6 km/h umsetzbar ist.
